# EUROPEAN PATENT APPLICATION

(11) **EP 4 501 752 A1**
(43) Date of publication of application: **05.02.2025**
(21) Application number: 23774992.4
(22) Date of filing: 23.03.2023
(51) Int. Cl.: B62D 21/15, F16F 7/00, F16F 7/12

(54) **SHOCK-ABSORBING MATERIAL AND METHOD FOR MANUFACTURING SAME**

(30) Priority: 24.03.2022 JP 2022048571
(71) Applicant: Mitsui Chemicals, Inc., Tokyo 104-0028 (JP)
(72) Inventor: INOUE, Hiroki, Chiba 299-0265 (JP); MIYATA, Atsushi, Tokyo 104-0028 (JP); MIZUMOTO, Kazuya, Chiba 299-0265 (JP)
(74) Representative: Hoffmann Eitle
(86) International application number: PCT/JP2023/011381
(87) International publication number: WO 2023/182397

(57) **Abstract**

The present invention provides a shock-absorbing material with which progressive crushing can be realized with a simple structure, and which absorbs a large amount of energy. The shock-absorbing material has a cylindrical body and a plate-form member attached to an end surface of the cylindrical body. The cylindrical body contains a laminate of fiber-reinforced resin layers including a plurality of reinforcing fibers aligned in one direction and a resin impregnated in the plurality of reinforcing fibers, the cylindrical body has a buckling-minimizing layer and a fragile layer, and the plate-form member is attached to the cylindrical body via an adhesive layer.

## Description

### Technical Field

The present invention relates to a shock-absorbing material and a method for manufacturing the shock-absorbing material.

### Background Art

In recent years, the use of a lightweight and high-strength fiber-reinforced resin has been studied as a shock-absorbing material that is installed in an automobile or the like and absorbs a shock from the outside.

For example, Patent Literature 1 describes a shock-absorbing apparatus including an energy-absorbing member (shock-absorbing material) that is formed of a composite material, such as fiber-reinforced plastic, has a cylindrical shape, and is composed of a plurality of layers in a radial direction. This shock-absorbing apparatus has a plate-like press section (on the side that receives a shock) and a plate-like support section (on the opposite side) in front of and behind a cylindrical energy-absorbing member, and the press section and the support section are held on the top and the bottom of the energy-absorbing member by the tension of a holding member formed of a wire or the like. Patent Literature 1 describes that the energy-absorbing member of the shape described above has a tapered shape in which the press section has a small diameter, and can induce progressive crushing with a large amount of energy absorption. It is also described that the holding member is bent at the time of shock and therefore does not hinder the progressive crushing.

Patent Literature 2 describes a shock-absorbing apparatus including a crash box (shock-absorbing material) that is composed of a fiber-reinforced plastic and is crushed in a predetermined crushing direction to absorb shock energy. This shock-absorbing apparatus includes a flat press member and a flat support member disposed in front of and behind the crash box. Patent Literature 2 also describes that a protrusion provided at a position where the press member comes into contact with the crash box allows crushing to progress stably from an initial stage of the crushing of the crash box to a stage where progressive crushing progresses.

### Citation List

### Patent Literature

PTL 1
   Japanese Patent Application Laid-Open No. 2015-67006
PTL 2
   Japanese Patent Application Laid-Open No. 2015-55295

### Summary of Invention

### Technical Problem

It is known that the amount of energy absorption at the time of shock is increased by so-called progressive crushing of continuous (gradual) breakage in the shock direction when a shock-absorbing material absorbs the shock. As described in Patent Literature 1 and Patent Literature 2, various methods for stable progressive crushing have been studied.

However, the shock-absorbing material with a tapered shape as described in Patent Literature 1 has problems, such as difficulty in post-processing with high accuracy and difficulty in holding by the press section and the support section. The press member provided with the protrusion as described in Patent Literature 2 requires precise alignment between the press member and the shock-absorbing material, which makes it difficult to assemble the shock-absorbing apparatus. Furthermore, the protrusion starting and promoting crushing also reduces the amount of energy absorption by the shock-absorbing material at the time of crushing.

Furthermore, according to the findings of the present inventors, even with the structures described in Patent Literature 1 and Patent Literature 2, a certain type of shock-absorbing material does not induce progressive crushing and may buckle.

In view of these problems, it is an object of the present invention to provide a shock-absorbing material with a simple structure that can realize progressive crushing and absorbs a large amount of energy, and a method for manufacturing the shock-absorbing material.

### Solution to Problem

One aspect of the present invention for solving the above mentioned problems relates to a shock-absorbing material according to [1] to [8] below.
[1] A shock-absorbing material including: a tubular body; and a plate-like member bonded to an end surface of the tubular body,
   in which the tubular body includes a laminate of fiber-reinforced resin layers, the fiber-reinforced resin layers containing a plurality of unidirectionally aligned reinforcing fibers and a resin impregnated into the plurality of reinforcing fibers,
   the tubular body includes a buckling-reducing layer and an easily breakable layer, and
   the plate-like member is bonded to the tubular body via an adhesive layer.
[2] The shock-absorbing material according to [1], in which the adhesive layer comprises an acrylic adhesive agent or a cured product thereof.
[3] The shock-absorbing material according to [1] or [2], in which in the buckling-reducing layer an angle formed by an alignment direction of the reinforcing fibers with respect to a length direction of the tubular body is 60 degrees or more and 80 degrees or less.
[4] The shock-absorbing material according to any one of [1] to [3], in which in the easily breakable layer an angle formed by an alignment direction of the reinforcing fibers with respect to a length direction of the tubular body is 5 degrees or more and less than 30 degrees.
[5] The shock-absorbing material according to any one of [1] to [4], in which the laminate has a structure composed of the buckling-reducing layer, the easily breakable layer, and the buckling-reducing layer stacked in this order from an inside to an outside of the tubular body.
[6] The shock-absorbing material according to any one of [1] to [5], in which the plate-like member contains a thermoplastic resin.
[7] The shock-absorbing material according to any one of [1] to [6], in which the fiber-reinforced resin layer contains the plurality of reinforcing fibers and a thermoplastic resin impregnated into the plurality of reinforcing fibers.
[8] The shock-absorbing material according to any one of [1] to [7], including a plurality of the tubular bodies, wherein the plurality of tubular bodies are bonded to the plate-like member.
   Another aspect of the present invention for solving the problems relates to a method for manufacturing a shock-absorbing material according to [9] below.
[9] A method for manufacturing a shock-absorbing material, the method including:
   preparing a tubular body including a laminate of fiber-reinforced resin layers, the fiber-reinforced resin layers containing a plurality of unidirectionally aligned reinforcing fibers and a resin impregnated into the plurality of reinforcing fibers, the tubular body including a buckling-reducing layer and an easily breakable layer; and
   bonding a plate-like member to an end surface of the tubular body using an adhesive agent.

### Advantageous Effects of Invention

The present invention provides a shock-absorbing material with a simple structure that can realize progressive crushing and absorbs a large amount of energy, and a method for manufacturing the shock-absorbing material.

### Brief Description of Drawings

FIG. 1 is a schematic view of a shock-absorbing material according to an embodiment of the present invention;
FIG. 2A is a schematic view of a tubular body, and FIGS. 2B, 2C, 2D, and 2E are schematic cross-sectional views of a region of the tubular body;
FIGS. 3A to 3G are schematic cross-sectional views of a region of the tubular body;
FIG. 4 is a flow chart of an example of a method for manufacturing a shock-absorbing material;
FIG. 5 is a schematic view of a typical apparatus for manufacturing a tubular body containing a thermoplastic resin; and
FIG. 6 is a load-displacement curve in Example 2 and Comparative Example 1.

### Description of Embodiments

### 1. Shock-Absorbing Material

An embodiment of the present invention relates to a shock-absorbing material including a tubular body and a pair of plate-like members disposed at both ends of the tubular body.

In the shock-absorbing material, the tubular body includes a laminate of a fiber-reinforced resin layer containing a plurality of unidirectionally aligned reinforcing fibers and a resin impregnated into the plurality of reinforcing fibers. Progressive crushing is realized by the angle at which the reinforcing fibers are aligned in each layer of the laminate. Furthermore, a simple structure with the plate-like member bonded to the tubular member via an adhesive layer increases the amount of energy absorption.

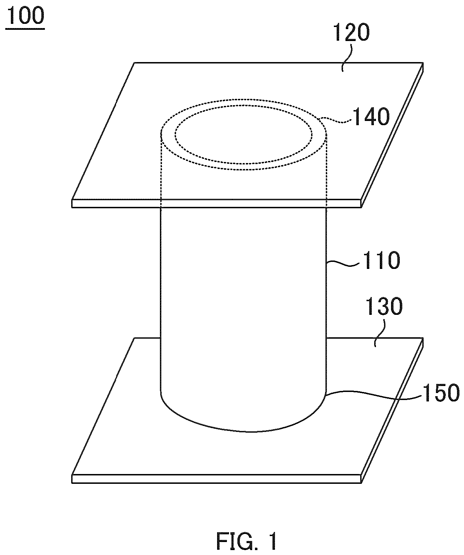

FIG. 1 is a schematic view of a shock-absorbing material according to an embodiment of the present invention. Shock-absorbing material 100 includes tubular body 110 and two plate-like members 120 and 130 bonded to both end surfaces of tubular body 110. Plate-like member 120 and plate-like member 130 are bonded to tubular body 110 via adhesive layer 140 and adhesive layer 150, respectively.

The shock-absorbing material may have any size. For example, tubular body 110 has an outer diameter of 12 mm or more and 110 mm or less, an inner diameter of 10 mm or more and 100 mm or less, and a height (the distance between the two plate-like members 120 and 130) of 20 mm or more and 1000 mm or less. Each of plate-like member 120 and plate-like member 130 may have a surface area of 34.5 mm2 or more and 1648.5 mm2 or less.

### 1-1. Tubular Body

Tubular body 110 includes a laminate composed of a plurality of fiber-reinforced resin layers each containing a plurality of unidirectionally aligned reinforcing fibers and a resin composition (matrix resin) impregnated into the reinforcing fibers.

### 1-1-1. Structure of Tubular Body

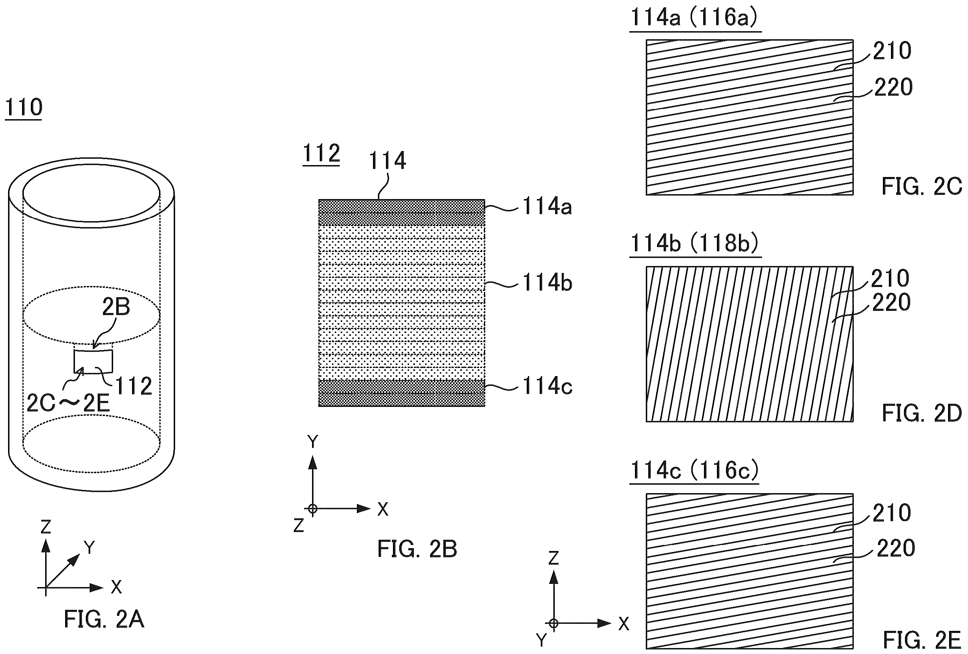

FIG. 2A is a schematic view of tubular body 110, and FIGS. 2B, 2C, 2D, and 2E are schematic cross-sectional views of region 112 of tubular body 110. FIG. 2B is a cross-sectional view in the thickness direction (the Y direction in FIG. 2A), and FIGS. 2C, 2D, and 2E are schematic cross-sectional views in an in-plane direction (the X-Z direction in FIG. 2A) along the surface of tubular body 110 at different depths in the thickness direction.

As illustrated in FIG. 2B, tubular body 110 is a laminate composed of a plurality of fiber-reinforced resin layers 114 stacked. In the present embodiment, tubular body 110 includes 16 fiber-reinforced resin layers 114. FIG. 2C illustrates fiber-reinforced resin layer 114a disposed near the inner surface of tubular body 110, FIG. 2D illustrates fiber-reinforced resin layer 114b disposed at an intermediate depth of tubular body 110, and FIG. 2E illustrates fiber-reinforced resin layer 114c disposed near the outer surface of tubular body 110. As illustrated in FIGS. 2C, 2D, and 2E, each fiber-reinforced resin layer 114 contains a plurality of unidirectionally aligned reinforcing fibers 210 and resin 220 impregnated into the plurality of reinforcing fibers.

As illustrated in FIGS. 2C, 2D, and 2E, tubular body 110 includes a plurality of types of fiber-reinforced resin layers 114 with different angles (hereinafter also referred to simply as "alignment angles") formed by an alignment direction of reinforcing fibers 210 with respect to the length direction (Z direction in FIGS. 2A to 2E) of the tubular body. In the present embodiment, a buckling-reducing layer with a large alignment angle is disposed at a position near the inner surface and at a position near the outer surface of tubular body 110 (FIGS. 2C and 2E), and an easily breakable layer with a small alignment angle is disposed at an intermediate depth of tubular body 110 (FIG. 2D). In the present embodiment, among the plurality of fiber-reinforced resin layers 114, two layers closest to the inner surface of tubular body 110 and two layers closest to the outer surface of tubular body 110 are buckling-reducing layers 116a and buckling-reducing layers 116c, respectively, and other twelve layers at an intermediate depth are easily breakable layers 118b.

Buckling-reducing layers 116a and buckling-reducing layers 116c are layers that reduce buckling of tubular body 110 at the time of shock. With reinforcing fibers 210 with a smaller alignment angle (reinforcing fibers 210 with an alignment direction closer to the length direction of tubular body 110), tubular body 110 more easily absorbs energy. However, reinforcing fibers 210 with a smaller alignment angle are more easily broken at the time of shock, and tubular body 110 buckles more easily. In contrast, buckling-reducing layers 116a and buckling-reducing layers 116c containing reinforcing fibers 210 with a larger alignment angle (the alignment direction of reinforcing fibers 210 is further away from the length direction of tubular body 110) reduce buckling of tubular body 110 and promote progressive crushing at the time of shock.

From the perspective of more effectively reducing buckling, reinforcing fibers 210 in the buckling-reducing layers preferably have a larger alignment angle. On the other hand, the alignment angle of reinforcing fibers 210 in the buckling-reducing layers can be insignificantly increased to increase the amount of energy absorption by the buckling-reducing layers and also increase the amount of energy absorption by tubular body 110. From the perspective of balancing these, reinforcing fibers 210 in the buckling-reducing layers preferably have an alignment angle of 50 degrees or more and less than 90 degrees, more preferably 55 degrees or more and 85 degrees or less, still more preferably 60 degrees or more and 80 degrees or less.

Easily breakable layers 118b increase the amount of energy absorption by tubular body 110 at the time of shock and induce and promote progressive crushing. For a tubular body including a laminate of fiber-reinforced resin layers, it is known that reinforcing fibers with a smaller alignment direction require a larger amount of energy for breakage and absorb a larger amount of energy.

From the perspective of further increasing the amount of energy absorption by tubular body 110, reinforcing fibers 210 in easily breakable layers preferably have a smaller alignment angle. On the other hand, easily breakable layers containing reinforcing fibers 210 with a certain degree of alignment angle can reduce buckling of tubular body 110 at the time of shock. From the perspective of balancing these, reinforcing fibers 210 in easily breakable layers preferably have an alignment angle of more than 0 degrees and less than 30 degrees, more preferably 5 degrees or more and less than 30 degrees, still more preferably 5 degrees or more and less than 15 degrees.

Furthermore, from the perspective of reducing the deviation of the physical properties of the entire tubular body 110, a buckling prevention layer preferably includes a two continuous layers in which reinforcing fibers 210 are aligned in opposite directions with respect to the length direction of the tubular body. Likewise, an easily breakable layer preferably includes a two continuous layers in which reinforcing fibers 210 are aligned in opposite directions with respect to the length direction of the tubular body.

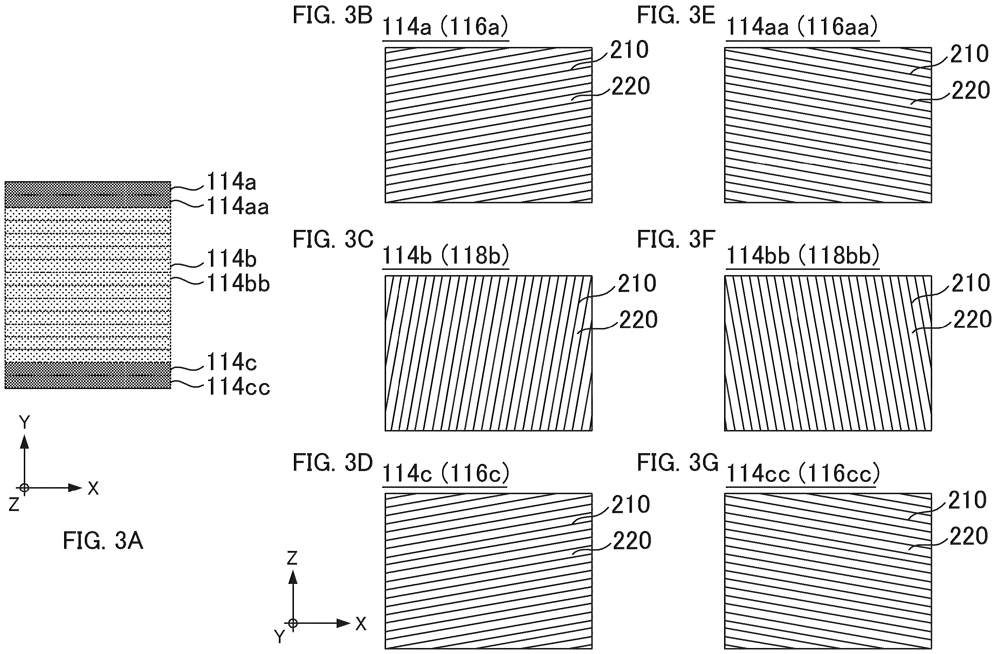

Similar to FIG. 2B, FIG. 3A is a cross-sectional view of tubular body 110 in the thickness direction. Similar to FIGS. 2C, 2D, and 2E, FIGS. 3B, 3C, and 3D are schematic cross-sectional views of fiber-reinforced resin layer 114a (buckling-reducing layer 116a), fiber-reinforced resin layer 114b (easily breakable layer 118b), and fiber-reinforced resin layer 114c (buckling-reducing layer 116c), respectively. FIG. 3E is a schematic view of fiber-reinforced resin layer 114aa serving as buckling-reducing layer 116aa continuous with fiber-reinforced resin layer 114a illustrated in FIG. 3B. FIG. 3F is a schematic view of fiber-reinforced resin layer 114bb serving as easily breakable layer 118bb continuous with fiber-reinforced resin layer 114b illustrated in FIG. 3C. FIG. 3G is a schematic view of fiber-reinforced resin layer 114cc serving as buckling-reducing layer 116cc continuous with fiber-reinforced resin layer 114c illustrated in FIG. 3C. As illustrated in FIGS. 3B and 3E, FIGS. 3C and 3F, and FIGS. 3D and 3G, in the present embodiment, in each of the buckling-reducing layers and the easily breakable layers, a fiber-reinforced resin layer in which the alignment of reinforcing fibers 210 with respect to the length direction of the tubular body is on the right side in the figure and a fiber-reinforced resin layer in which the alignment of reinforcing fibers 210 with respect to the length direction of the tubular body is on the opposite side or on the left side in the figure are continuously disposed. In the present description, regarding the fiber-reinforced resin layers in which the alignments of reinforcing fibers 210 are opposite to each other, the alignment angle of reinforcing fibers 210 in one fiber-reinforced resin layer may be represented by a positive (+) angle, and the alignment angle of reinforcing fibers 210 in the other fiber-reinforced resin layer may be represented by a negative (-) angle. At this time, the preferred alignment angle described above is the absolute value of the alignment angle marked with a sign of + or -.

A buckling-reducing layer and an easily breakable layer in the laminate may be disposed in any way and can be disposed at arbitrary positions. From the perspective of more effectively reducing the buckling of tubular body 110, a buckling-reducing layer is preferably disposed on the outer surface or the inner surface of tubular body 110, more preferably on both the outer surface and the inner surface. Furthermore, from the perspective of further increasing the amount of energy absorption by tubular body 110 at the time of shock, a plurality of easily breakable layers are preferably continuously disposed. From the perspective of achieving both of these, the laminate preferably has a structure composed of one or a plurality of buckling-reducing layers, one or a plurality of easily breakable layers, and one or a plurality of buckling-reducing layers stacked in this order from the inside to the outside of tubular body 110.

The number of buckling-reducing layers is not particularly limited and can depend on the balance between buckling reduction and the amount of energy absorption at the time of shock. For example, the number of buckling-reducing layers is preferably 2 or more and 12 or less, more preferably 2 or more and 10 or less, still more preferably 2 or more and 8 or less. When a laminate has a buckling-reducing layer at two or more positions as in buckling-reducing layer 116a and buckling-reducing layer 116c in the present embodiment, the number of buckling-reducing layers is the number of buckling-reducing layers at each position.

The number of easily breakable layers is also not particularly limited and can depend on the balance between buckling reduction and the amount of energy absorption at the time of shock. For example, the number of buckling-reducing layers is preferably 2 or more and 36 or less, more preferably 4 or more and 24 or less, still more preferably 6 or more and 16 or less. The number of easily breakable layers is the total number of easily breakable layers in the laminate.

The findings of the present inventors show that even a smaller number of buckling-reducing layers can have a sufficient buckling reduction effect, whereas the amount of energy absorption at the time of shock increases with the number of easily breakable layers. Thus, a laminate preferably has a larger number of easily breakable layers than the number of buckling-reducing layers.

### 1-1-2. Material of Tubular Body

### 1-1-2-1. Reinforcing Fibers

The material of the reinforcing fibers is not particularly limited. For example, carbon fibers, glass fibers, aramid fibers, alumina fibers, silicon carbide fibers, boron fibers, metal fibers, and the like can be used as the reinforcing fibers. Among these, carbon fibers are preferred in terms of good mechanical properties and a formed product with a further reduced weight. The carbon fibers are, for example, PAN-based carbon fibers, pitch-based carbon fibers, or rayon-based carbon fibers. Among these, PAN-based long carbon fibers are preferred in terms of a good balance between strength and elastic modulus.

A surface oxygen concentration ratio [O/C], which is a ratio of the number of oxygen (O) atoms to the number of carbon (C) atoms on a surface of the carbon fibers measured by X-ray photoelectron spectroscopy, is 0.05 or more and 0.5 or less, more preferably 0.08 or more and 0.4 or less, still more preferably 0.1 or more and 0.3 or less. When the surface oxygen concentration ratio is 0.05 or more, a sufficient amount of functional groups can be secured on the surface of the carbon fibers and can further enhance adhesiveness to the matrix resin. A surface oxygen concentration ratio of 0.5 or less results in carbon fibers with high handleability and productivity. The surface oxygen concentration ratio [O/C] can be measured by a method described in International Publication No. WO 2017/183672. The surface oxygen concentration ratio [O/C] can be controlled by a known method, including electrolytic oxidation treatment, chemical oxidation treatment, gas-phase oxidation treatment, or the like, preferably electrolytic oxidation treatment.

From the perspective of sufficiently enhancing the effect of improving strength by the reinforcing fibers, the reinforcing fibers preferably have an average diameter of 1 µm or more and 20 µm or less, more preferably 3 µm or more and 15 µm or less, still more preferably 4 µm or more and 10 µm or less.

The reinforcing fibers typically have a length of 15 mm or more. The lower limit of the length of the reinforcing fibers is preferably 20 mm or more, more preferably 100 mm or more, still more preferably 500 mm or more. The maximum value of the upper limit of the length of the reinforcing fibers is preferably the same as the maximum value of the length of a UD sheet and is, for example, 50 m. In general, a UD sheet used in a resin compact described later is a UD sheet cut into a desired length after production. Thus, the length of reinforcing fibers in a UD sheet in a resin compact may be smaller than the minimum value of the length described above.

The reinforcing fibers are preferably produced by opening a fiber bundle bundled with a sizing agent. The number of single yarns of the fiber bundle is typically, but not limited to, 100 or more and 350,000 or less, preferably 1,000 or more and 250,000 or less, more preferably 5,000 or more and 220,000 or less.

The sizing agent may be a known sizing agent, including an olefin emulsion, a urethane emulsion, an epoxy emulsion, a nylon emulsion, or the like. Among these, an olefin emulsion is preferred, and an ethylene emulsion or a propylene emulsion is more preferred. The ethylene emulsion contains an ethylene polymer, such as an ethylene homopolymer or a copolymer of ethylene and an α-olefin with 3 or more and 10 or less carbon atoms. The propylene emulsion contains a propylene polymer, such as a propylene homopolymer or a copolymer of propylene and ethylene or an α-olefin with 4 or more and 10 or less carbon atoms.

In particular, from the perspective of further enhancing the adhesion between a reinforcing fiber bundle and a matrix resin, the sizing agent preferably contains an unmodified polyolefin and a modified polyolefin. The unmodified polyolefin is preferably homopolypropylene, homopolyethylene, an ethylene-propylene copolymer, a propylene-1-butene copolymer, or an ethylene-propylene-1-butene copolymer. The modified polyolefin may be, for example, one produced by grafting a carboxy group, a carboxylic anhydride group, or a carboxylate group to a polymer chain of an unmodified polyolefin and forming a salt between the functional group and a metal cation. Among these, a modified polyolefin containing a metal carboxylate is more preferred.

### 1-1-2-2. Matrix Resin

The matrix resin is a resin composition containing a thermoplastic resin or a thermosetting resin. The matrix resin may contain a filler and another component other than the resin component.

The thermoplastic resin is, for example, a polycarbonate resin, a styrene resin, a polyamide resin, a polyester resin, a poly(phenylene sulfide) resin (PPS resin), a modified poly(phenylene ether) resin (modified PPE resin), a polyacetal resin (POM resin), a liquid crystal polyester, a polyarylate, an acrylic resin, including a poly(methyl methacrylate) resin (PMMA), vinyl chloride, a polyimide (PI), a polyamideimide (PAI), a poly(ether imide) (PEI), a polysulfone, a poly(ether sulfone), a polyketone, a poly(ether ketone), a poly(ether ether ketone) (PEEK), a polyolefin, including a polyethylene, a polypropylene, a polybutene, or poly-4-methyl-1-pentene, a modified polyolefin thereof, a phenoxy resin, or the like. The polyolefin may be a copolymer, including an ethylene/propylene copolymer, an ethylene/1-butene copolymer, an ethylene/propylene/diene copolymer, an ethylene/carbon monoxide/diene copolymer, an ethylene/ethyl (meth)acrylate copolymer, an ethylene/glycidyl (meth)acrylate, an ethylene/vinyl acetate/glycidyl (meth)acrylate copolymer, or the like.

The thermosetting resin is, for example, an epoxy resin, a phenolic resin, a melamine resin, a urea resin, a diallyl phthalate resin, a silicone resin, a urethane resin, a furan resin, a ketone resin, a xylene resin, a thermosetting polyimide resin, an unsaturated polyester resin, a diallyl terephthalate resin, or the like.

Among these, a thermoplastic resin is preferred from the perspective of further improving the amount of energy absorption at the time of shock, a polyamide resin or a polyester resin is preferred as a resin with higher polarity, and a polyolefin resin is preferred as a resin with lower polarity. A polypropylene resin or a polyamide resin is preferred from the perspective of facilitating progressive crushing, reducing the cost, and reducing the weight of a formed product. Furthermore, from the perspective of enhancing an affinity for reinforcing fibers bundled with the sizing agent, the matrix resin may contain the modified polyolefin.

The polypropylene resin may be of any type and may be a propylene homopolymer, a propylene copolymer, or a mixture thereof. The polypropylene resin may have any stereoregularity and may be isotactic, syndiotactic, or atactic. The stereoregularity is preferably isotactic or syndiotactic.

The polypropylene resin may be an unmodified polypropylene resin (P1), a modified polypropylene resin (P2) containing a carboxylate or the like bonded to a polymer chain thereof, or a mixture thereof, preferably a mixture thereof. In the mixture, the mass ratio [(P1)/(P1 + P2)] of the unmodified polypropylene resin (P1) to the total of the unmodified polypropylene resin (P1) and the modified polypropylene resin (P2) is preferably 80mass% or more and 99mass% or less, more preferably 85mass% or more and 98mass%, still more preferably 90mass% or more and 97mass% or less.

The polyamide resin may be of any type and may be a known polyamide resin. The polyamide resin is, for example, polyamide 6, polyamide 12, polyamide 66, polyamide 11, an aromatic polyamide, or the like. Among these, polyamide 6 or polyamide 12 is preferred.

The polyamide resin dried at 80°C for 5 hours preferably has a melt flow rate (MFR) of 40 g/10 minutes or more, more preferably 40 g/10 minutes or more and 400 g/10 minutes or less, as measured at 230°C and at a load of 2.16 kg in accordance with ASTM D1238. At a MFR in this range, it is easy to sufficiently impregnate reinforcing fibers with the matrix resin.

The polyamide resin preferably has a weight-average molecular weight (Mw) of 5,000 or more and 50,000 or less, more preferably 5,000 or more and 30,000 or less.

The matrix resin may contain another component, such as a resin other than those described above or short fibers with a shorter length than the reinforcing fibers.

### 1-2. Plate-Like Member

Plate-like member 120 and plate-like member 130 are plate-like members disposed at one end surface and the other end surface of tubular body 110. Plate-like member 120 is disposed on the side of shock-absorbing material 100 that receives a shock, and can be a press member that presses the tubular body at the time of shock to start and promote progressive crushing. Plate-like member 130 can be a support member for supporting tubular body 110 at the time of shock. Plate-like member 120 and plate-like member 130 can be assembling sections for assembling shock-absorbing material 100 to another member.

The shape and size of plate-like member 120 and plate-like member 130 are not particularly limited and can be appropriately determined according to the use of shock-absorbing material 100. The shape of the surface of each plate-like member on the side in contact with the end surface of tubular body 110 is preferably planar. With the planar shape, the press member can easily and efficiently start progressive crushing, and the support member can increase the efficiency of supporting tubular member 130.

The material of plate-like member 120 and plate-like member 130 is not particularly limited and can be a known metal, resin, or the like.

The metal is, for example, iron, copper, nickel, gold, silver, platinum, cobalt, zinc, lead, tin, titanium, chromium, aluminum, magnesium, manganese, an alloy thereof (for example, stainless steel, an aluminum alloy, brass, phosphor bronze, or the like), or the like. Among these, an aluminum-based metal or iron is preferred in terms of high strength and versatility, and aluminum or an aluminum-based metal is more preferred in terms of light weight.

The resin may be a thermoplastic resin or a thermosetting resin.

The thermoplastic resin is, for example, a polycarbonate resin, a styrene resin, a polyamide resin, a polyester resin, a poly(phenylene sulfide) resin (PPS resin), a modified poly(phenylene ether) resin (modified PPE resin), a polyacetal resin (POM resin), a liquid crystal polyester, a polyarylate, an acrylic resin, including a poly(methyl methacrylate) resin (PMMA), vinyl chloride, a polyimide (PI), a polyamideimide (PAI), a poly(ether imide) (PEI), a polysulfone, a poly(ether sulfone), a polyketone, a poly(ether ketone), a poly(ether ether ketone) (PEEK), a polyolefin, including a polyethylene, a polypropylene, a polybutene, or poly-4-methyl-1-pentene, a modified polyolefin thereof, a phenoxy resin, or the like. The polyolefin may be a copolymer, including an ethylene/propylene copolymer, an ethylene/1-butene copolymer, an ethylene/propylene/diene copolymer, an ethylene/carbon monoxide/diene copolymer, an ethylene/ethyl (meth)acrylate copolymer, an ethylene/glycidyl (meth)acrylate, an ethylene/vinyl acetate/glycidyl (meth)acrylate copolymer, or the like.

The thermosetting resin is, for example, an epoxy resin, a phenolic resin, a melamine resin, a urea resin, a diallyl phthalate resin, a silicone resin, a urethane resin, a furan resin, a ketone resin, a xylene resin, a thermosetting polyimide resin, an unsaturated polyester resin, a diallyl terephthalate resin, or the like.

Among these, the thermoplastic resin is preferred from the perspective of further improving the amount of energy absorption at the time of shock. Among the thermoplastic resin, from the perspective of further improving the amount of energy absorption at the time of shock, a polyamide resin or a polyolefin resin is preferred, a polyolefin resin is more preferred, and from the perspective of further promoting progressive crushing polypropylene is still more preferred.

From the perspective of increasing the strength of plate-like member 120 and plate-like member 130, the material of these plate-like members is preferably a fiber-reinforced resin. The reinforcing fibers may be of any type and may be glass fibers, aramid fibers, alumina fibers, silicon carbide fibers, boron fibers, metal fibers, or the like. The reinforcing fibers may also have any form and may be randomly arranged short fibers or unidirectionally aligned long fibers. From the perspective of increasing the strength of plate-like member 120 and plate-like member 130, unidirectionally aligned long fibers are preferred, and long fibers impregnated with a thermoplastic resin (preferably a polyamide resin or a polyolefin resin, more preferably a polyolefin resin, still more preferably a polypropylene) are more preferred. When the long fibers are arranged, the long fibers may be woven or may be a laminate of a plurality of layers containing the unidirectionally aligned long fibers with different alignment directions.

The resin in tubular body 110 may be the same as or different from the resin contained in plate-like member 120 or plate-like member 130. When both of these resins are thermoplastic resins, both resins are preferably compatible with each other. The term "compatible" means that a single phase is formed when both resins are mixed by heating to a temperature equal to or higher than the melting point and are cooled to 25°C. Furthermore, both resins are more preferably the same. The term "the same" means that both resins have the same monomer composition, polystyrene equivalent weight-average molecular weight (Mw), and molecular weight distribution (Mw/Mn) within the limits of measurement error. When both resins are compatible with each other and are the same, an adhesive agent with high adhesiveness to both the tubular body and the plate-like member is easily selected as a material of an adhesive layer and can further increase the adhesive strength therebetween.

### 1-3. Adhesive Layer

Plate-like member 120 and plate-like member 130 are bonded to tubular body 110 via adhesive layer 140 and adhesive layer 150, respectively. At least one of plate-like member 120 and plate-like member 130 may be bonded to tubular body 110 via an adhesive layer. From the perspective of further increasing the amount of energy absorption at the time of shock, both of the plate-like members are preferably bonded to tubular body 110 via an adhesive layer.

Adhesive layer 140 and adhesive layer 150 are layers composed of an adhesive agent or a solidified product thereof and are layers for bonding the resin member and the metal member described above. 140 and adhesive layer 150 may contain an inorganic substance, such as talc or glass beads, or may be a double-sided tape with an adhesive agent applied to both surfaces thereof.

The findings of the present inventors show that plate-like member 120 and plate-like member 130 bonded to tubular body 110 via an adhesive layer can absorb a larger amount of energy at the time of shock than plate-like members simply combined using a jig or the like as described in Patent Literature 1 and Patent Literature 2. Although the reason for this is not clear, the present inventors assume that relatively flexible adhesive layer 140 and adhesive layer 150 disposed between tubular body 110 and plate-like member 120 and plate-like member 130, which are both hard, easily release a shock to the outside via the adhesive layers.

In the present description, adhesion includes both adhesion and cohesion, and adhesion and cohesion are not distinguished from each other. More specifically, in the present description, adhesive layer 140 and adhesive layer 150 may bond plate-like member 120 and plate-like member 130 to tubular body 110 by any of adhesion and cohesion, and an adhesive agent includes both a sticky agent and an adhesive agent.

Furthermore, an adhesive agent in the present description may have any form and may be an adhesive agent of a known form, such as a liquid form or a tape form. Among them, a liquid form is preferred from the perspective of further increasing the adhesive strength. The liquid form can be any of a one-component curing form and a two-component curing form.

The thickness of each of adhesive layer 140 and adhesive layer 150 is appropriately determined depending on the type of adhesive agent or the like and is preferably 10 µm or more and 3000 µm or less, more preferably 30 µm or more and 2000 µm or less, still more preferably 50 µm or more and 1000 µm or less. An adhesive layer with a thickness of 10 µm or more can easily and firmly bond tubular body 110 to plate-like member 120 and plate-like member 130. An adhesive layer with a thickness of 500 µm or less can increase the strength of shock-absorbing material 100.

The type of adhesive agent constituting adhesive layer 140 and adhesive layer 150 is not particularly limited and is appropriately selected according to the type, shape, and the like of tubular body 110, plate-like member 120, and plate-like member 130. An adhesive agent for forming adhesive layer 140 and adhesive layer 150 may be an acrylic adhesive agent, an epoxy adhesive agent, a urethane adhesive agent, or a cyanoacrylate adhesive agent.

The acrylic adhesive agent may be any known (meth)acrylic adhesive agent. The (meth)acrylic adhesive agent may be a one-component type or a two-component type. The term "(meth)acryl", as used herein, refers to at least one of acryl and methacryl, and "(meth)acrylate" refers to at least one of acrylate and methacrylate. The term "acrylic" refers to at least one of acrylic and methacrylic.

The one-component (meth)acrylic adhesive agent is, for example, a thermosetting or photocuring adhesive agent containing a (meth)acrylate and/or a (meth)acrylate polymer and a polymerization initiator and/or a cross-linker.

The two-component acrylic adhesive agent is, for example, an adhesive agent containing a first liquid, which contains a (meth)acrylate monomer and an organic peroxide, and a second liquid, which contains a (meth)acrylate monomer and a reducing agent. The two-component acrylic adhesive agent is also, for example, an adhesive agent containing a first liquid, which contains a (meth)acrylic polymer with a crosslinking functional group, and a second liquid, which contains a cross-linker. The two-component acrylic adhesive agent is also, for example, an adhesive agent containing a first liquid, which contains a (meth)acrylate monomer, and a second liquid, which contains a (meth)acrylate monomer and/or a polymerization initiator. These are examples, and the acrylic adhesive agent is not limited thereto.

The (meth)acrylate monomer in the first liquid and/or the second liquid of the two-component acrylic adhesive agent may be methyl (meth)acrylate, propyl (meth)acrylate, 2-hydroxyethyl (meth)acrylate, 2-hydroxypropyl (meth)acrylate, 2-ethylhexyl (meth)acrylate, glycidyl (meth)acrylate, phenoxyethyl (meth)acrylate, tetrahydrofurfuryl (meth)acrylate, or the like.

The organic peroxide in the first liquid of the two-component acrylic adhesive agent may be any compound that can produce a radical and cause vinyl polymerization of a (meth)acrylate monomer. The organic peroxide is, for example, a hydroperoxide, an alkyl peroxide, a diacyl peroxide, a ketone peroxide, or the like. The polymerization initiator in the two-component acrylic adhesive agent may be the organic peroxide or an azo compound. The azo compound is, for example, 2,2'-azobisisobutyronitrile (AIBN), 2,2'-azobis(2,4-dimethylvaleronitrile) (ABVN), 2,2'-azobis(4-methoxy-2,4-dimethylvaleronitrile), 1,1'-azobis(cyclohexane-1-carbonitrile), or 2,2'-azobis(isobutyric acid)dimethyl.

The reducing agent in the second liquid of the two-component acrylic adhesive agent is, for example, a thiourea compound, a metal chelate compound, a metallic soap, a tertiary amine, a polyamine, a mercaptan, or the like.

The (meth)acrylic polymer with a crosslinking functional group in the first liquid of the two-component acrylic adhesive agent is, for example, a polymer containing the (meth)acrylate monomer, or the like. The cross-linker in the second liquid is, for example, an isocyanate cross-linker, an epoxy cross-linker, a carbodiimide cross-linker, a polyfunctional (meth)acrylate, or the like.

The epoxy adhesive agent may be a one-component type or a two-component type. The one-component epoxy adhesive agent is, for example, a room-temperature-curing or heat-curing composition containing a latent curing agent, such as a ketimine, oxazolidine, or aldimine compound, and a liquid epoxy resin.

The two-component epoxy adhesive agent is, for example, an adhesive agent that contains a first liquid containing an epoxy resin and a second liquid containing a curing agent. The epoxy resin in the first liquid is, for example, a bisphenol A epoxy resin, a bisphenol F epoxy resin, a bisphenol AD epoxy resin, a novolac epoxy resin, or the like. The curing agent in the second liquid is, for example, an amine curing agent, such as a linear aliphatic amine, an alicyclic amine, an aromatic amine, or a nitrogen-containing aromatic, such as an imidazole compound, an amidoamine curing agent, a ketimine, or the like.

The urethane adhesive agent may be a one-component type or a two-component type. The one-component urethane adhesive agent is, for example, a moisture-curing adhesive agent containing a urethane prepolymer with an isocyanate group.

The two-component urethane adhesive agent is, for example, an adhesive agent that contains a first liquid containing an isocyanate and a second liquid containing a component that can react with the isocyanate. The urethane prepolymer in the first liquid is, for example, an isocyanate, such as methylenebis(p-phenylene diisocyanate), tolylene diisocyanate, hexamethylene diisocyanate, 1-chlorophenyl diisocyanate, 1,5-naphthylene diisocyanate, thiodipropyl diisocyanate, ethylbenzene-α-2-di-isocyanate, 4,4,4-triphenylmethane triisocyanate, pentamethylene diisocyanate, bis(isocyanatomethyl)cyclohexane, or m-xylylene diisocyanate.

The component that can react with the isocyanate in the second liquid is, for example, ethylene glycol, propylene glycol, triethylene glycol, tetraethylene glycol, glycerol, hexanetriol, xylylene diol, lauric acid monoglyceride, stearic acid monoglyceride, oleic acid monoglyceride, polyethylene glycol), polypropylene glycol), a polyester polyol, a polyamine (or polyamide), or the like.

The cyanoacrylate adhesive agent is, for example, an adhesive agent containing methyl cyanoacrylate, ethyl cyanoacrylate, methoxyethyl cyanoacrylate, butyl cyanoacrylate, octyl cyanoacrylate, or the like.

From the perspective of further increasing the amount of energy absorption at the time of shock, adhesive layer 140 and adhesive layer 150 preferably contain an acrylic adhesive agent or a cured product thereof. Although the reason why the use of an acrylic adhesive agent increases the amount of energy absorption is not clear, it is thought that a load-displacement curve has no clear yield point, and progressive crushing is therefore efficiently promoted, and shock-absorbing material 100 more easily absorbs the energy.

### 1-4. Method for Manufacturing Shock-Absorbing Material

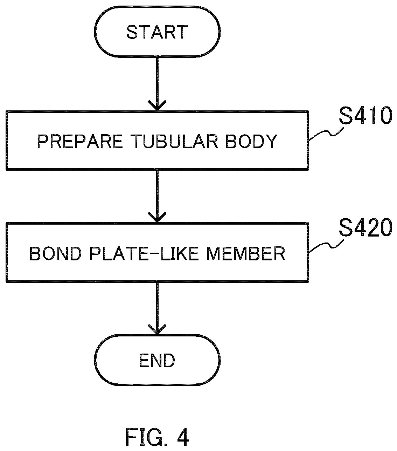

FIG. 4 is a flow chart of an example of a method for manufacturing the shock-absorbing material described above.

The shock-absorbing material can be manufactured by a method including a step of preparing a tubular body including a laminate of a fiber-reinforced resin layer containing a plurality of unidirectionally aligned reinforcing fibers and a resin impregnated into the plurality of reinforcing fibers (step S410), and a step of bonding a plate-like member to an end surface of the tubular body using an adhesive agent (step S420).

### 1-4-1. Step S410: Preparation of Tubular Body

In this step, the tubular body is prepared.

The tubular body may be produced by any method. For example, when a thermoplastic resin is used as a resin for the tubular body, the tubular body may be produced by winding a mandrel with a tape-like unidirectional reinforcing fiber resin sheet (hereinafter also referred to simply as a "Uni-Direction (UD) tape"), which is formed by impregnating a plurality of unidirectionally aligned reinforcing fibers with the thermoplastic resin, and fusing the resin sheet. When a thermosetting resin is used as a resin for the tubular body, the tubular body may be produced by winding a mandrel with a tape-like unidirectional reinforcing fiber resin prepreg, which is produced by impregnating a plurality of unidirectionally aligned reinforcing fibers with an uncured thermosetting resin, and curing the resin. Alternatively, the tubular body may be prepared by purchasing a tubular body produced in advance.

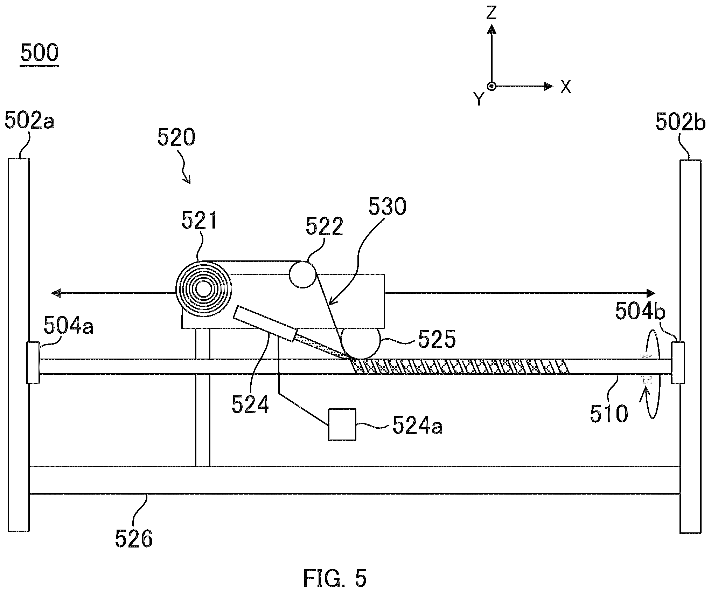

FIG. 5 is a schematic view of a typical structure of apparatus 500 for manufacturing a tubular body containing a thermoplastic resin as the resin.

Apparatus 500 includes rotating mandrel 510 and fusion unit 520, which fuses UD tape 530 to the surface of mandrel 510 to produce a tubular body. In apparatus 500, a controller (not shown) rotates mandrel 510 and causes each component of fusion unit 520 to perform the following operation.

The phrase "the surface of mandrel 510", as used herein, refers to any one of the surface of mandrel 510 in contact with UD tape 530 and the surface of UD tape 530 wound around and fused to mandrel 510.

Mandrel 510 are supported at both ends by rotating support section 504a and rotating support section 504b held by support 502a and support 502b, respectively, and is rotated with the rotation of rotating support section 504a and rotating support section 504b.

Fusion unit 520 includes storage section 521 for storing and feeding UD tape 530 wound in a roll, guide roller 522 for supporting and guiding UD tape 530 fed from storage section 521 to mandrel 510, laser irradiation section 524 as an objective lens unit for irradiating UD tape 530 fed to mandrel 510 with a laser oscillated from laser oscillation source 524a, and drafting roller 525 for drafting UD tape 530 fed to mandrel 510 toward the surface of mandrel 510.

Storage section 521 stores UD tape 530 wound in a roll and feeds UD tape 530 when the tubular body is produced. Guide roller 522 is located in contact with the movement path of UD tape 530 connecting storage section 521 and mandrel 510, and guides UD tape 530 moving along the movement path to the surface of mandrel 510 while supporting UD tape 530 under tension. Laser irradiation section 524 is coupled to laser oscillation source 524a located outside fusion unit 520 via an optical fiber or the like so as to be capable of optical communication, and emits a laser oscillated by laser oscillation source 524a while converging the laser beam using an objective lens. More specifically, laser irradiation section 524 emits laser such that at least one of UD tape 530 and the surface of mandrel 510 is irradiated with the laser immediately before or at the time when moving UD tape 530 comes into contact with the surface of mandrel 510. Drafting roller 525 drafts UD tape 530 fed to mandrel 510 toward the surface of mandrel 510. In a state where at least one of UD tape 530 fed to mandrel 510 and UD tape 530 already wound around and fused to mandrel 510 is melted by laser irradiation, fed UD tape 530 is drafted toward the surface of mandrel 510, is fused to mandrel 510, and is formed into the shape of the tubular body.

Fusion unit 520 houses these components inside a robot arm. Fusion unit 520 fuses UD tape 530 while translating along guide section 526 and reciprocating in the axial direction of rotating mandrel 510. Fusion unit 520 is also configured to be vertically movable and rotatably movable. The angle at which UD tape 530 comes into contact with the surface of mandrel 510 can be changed by rotational movement to produce the tubular body including a plurality of layers containing reinforcing fibers aligned in different directions.

The angle at which UD tape 530 comes into contact with the surface of mandrel 510 may be determined according to the alignment angle of reinforcing fibers in each fiber-reinforced resin layer included in the tubular body. In the present embodiment, the angle at which UD tape 530 comes into contact with the surface of mandrel 510 is increased to form a buckling-reducing layer with a large alignment angle, and the angle at which UD tape 530 comes into contact with the surface of mandrel 510 is decreased to form a buckling-reducing layer with a large alignment angle.

A tubular body produced in this manner and pulled out from mandrel 510 has an elongated cylindrical shape and includes a laminate of a fiber-reinforced resin layer containing a plurality of unidirectionally aligned reinforcing fibers impregnated with a resin. The laminate includes one or a plurality of buckling-reducing layers and one or a plurality of easily breakable layers, each containing reinforcing fibers with different alignment angles, in the fiber-reinforced resin layer. Subsequently, the tubular body may be subjected to surface treatment or the like. The tubular body is cut into a desired size before use.

### 1-4-2. Step S420: Bonding of Plate-Like Member

Next, a plate-like member is bonded to an end surface of the prepared tubular body using an adhesive agent.

More specifically, first, a plate-like member is prepared.

The plate-like member can be formed by a known forming method. For example, a plate-like member containing unidirectionally aligned long fibers can be produced by a method of stacking and pressing a plurality of unidirectional reinforcing fiber resin sheets. At this time, the alignment direction of reinforcing fibers in each of a plurality of unidirectional reinforcing fiber resin sheets can also be independently changed to produce a plate-like member including a laminate of a plurality of layers containing long fibers with different alignment directions.

The plate-like member may have a fastening hole or the like for assembling the shock-absorbing material to another member.

The adhesive agent is then applied to at least one, preferably both, of an end surface of the prepared tubular body and the surface of the plate-like member. When the adhesive agent is applied to the surface of the plate-like member, the adhesive agent may be applied to bond an end surface of the tubular body.

From the perspective of enhancing the adhesion using the adhesive agent, an end surface of the tubular body and the surface of the plate-like member may be pretreated before the application of the adhesive agent. The pretreatment is, for example, degreasing treatment, primer treatment or plasma treatment depending on the type of adhesive agent, or the like. For example, when a cyanoacrylate adhesive agent is used, these end surface and surface are preferably subjected to primer treatment. When a urethane adhesive agent or an epoxy adhesive agent is used, these end surface and surface are preferably subjected to plasma treatment.

The adhesive agent is then cured, for example, by standing under pressure or, if necessary, by heating to produce a shock-absorbing material including the plate-like member bonded to the tubular body via the adhesive layer.

### 2. Use

The use of the shock-absorbing material may be, but is not limited to, an automotive member, a shock-absorbing member for transport equipment, such as a motorcycle, a bicycle, or a snowmobile, or the like. In particular, it can be preferably used as a shock-absorbing member, such as a door reinforcement, an impact beam, a bumper beam extension, or a crash box, in an automobile.

### 3. Other Embodiments

The structure of the shock-absorbing material is not limited to the structures described above. For example, FIG. 1 illustrates a shock-absorbing material with only one tubular body. The shock-absorbing material may have two, three, or more tubular bodies, and these tubular bodies may be bonded to the same plate-like member.

The buckling-reducing layer and the easily breakable layer are not limited to the laminate of fiber-reinforced resin layers and may be a combination of layers with different delamination strength and buckling strength in layer, such as a combination of a stampable sheet and a UD sheet or a combination of a short-fiber-reinforced resin sheet and a UD sheet.

### EXAMPLES

The present invention is more specifically described with reference to Examples, but the scope of the present invention is not limited to the description of Examples.

### 1. Production of UD Sheet

### 1-1. Preparation of Sizing Agent

A mixture prepared by mixing 100 parts by mass of propylene resin A, 10 parts by mass of propylene resin B, and 3 parts by mass of a surfactant was supplied at a rate of 3000 g/h from a hopper of a twin-screw extruder (manufactured by Ikegai Corporation, PCM-30, LID = 40). Furthermore, 20% aqueous potassium hydroxide was continuously supplied at a rate of 90 g/h from a supply port provided in a vent section of the extruder, and the mixture was continuously extruded at a heating temperature of 210°C. The extruded resin mixture was cooled to 110°C using a jacketed static mixer installed at the extrusion port and was put into hot water at 80°C to produce an emulsion with a solid concentration of 45%.

The propylene resin A is a propylene-butene-ethylene copolymer. The propylene resin A had a weight-average molecular weight of 120,000 as measured by GPC and had no melting point.

The propylene resins B is a modified resin produced by mixing 96 parts by mass of a propylene-butene copolymer, 4 parts by mass of maleic anhydride, and 0.4 parts by mass of a polymerization initiator (manufactured by NOF Corporation, trade name: Perhexyne 25B) and modifying the mixture at a heating temperature of 160°C for 2 hours.

The surfactant is potassium oleate.

### 1-2. Carbon Fiber

A carbon fiber bundle (manufactured by Mitsubishi Rayon Co., Ltd., trade name: Pyrofil TR 50S12L, number of filaments: 24000, strand strength: 5000 MPa, strand modulus: 242 GPa) was immersed in acetone, was subjected to ultrasonic waves for 10 minutes, was then pulled out, was washed three times with acetone, and was dried at room temperature for 8 hours to remove a sizing agent deposited on the carbon fiber bundle.

### 1-3. Sizing Treatment

The emulsion was applied to the carbon fibers by roller impregnation. The mixture was then dried on-line at a temperature of 130°C for 2 minutes to remove low-boiling components and produce a sheet-like reinforcing fiber bundle. The amount of the emulsion deposited on the reinforcing fiber bundle was 0.87mass%.

### 1-4. Impregnation with Resin

57 parts by mass of the sized reinforcing fibers were impregnated with 43 parts by mass of a resin composition containing a masterbatch containing a commercially available unmodified propylene resin, modified polypropylene, and carbon black, were processed into a sheet, and were then cut with a slitter into a tape with a width of 12.5 mm to produce a UD sheet with an average thickness of 150 µm.

The unmodified propylene resin is trade name: Prime Polypro J106MG (melting point: 160°C) manufactured by Prime Polymer Co., Ltd.

The modified polypropylene is a modified polypropylene grafted with 0.5mass% of maleic anhydride (melt flow rate: 9.1 g/10 min as measured at 190°C and at a load of 2.16 kg in accordance with ASTM D1238, melting point: 155°C).

The masterbatch containing the carbon black is PEONY (registered trademark) BLACK BMB-16117 (carbon black content: 40%) manufactured by DIC Corporation.

The resin composition was prepared by mixing 85 parts by mass of the unmodified propylene resin, 15 parts by mass of the modified polypropylene, and the masterbatch in such an amount that the carbon black content was 1mass% of the total mass of the resin composition.

### 2. Production of Tubular Body

Using an apparatus illustrated in FIG. 5, a tape-like UD sheet was spirally fused on the surface of a mandrel with an outer diameter of Φ30 mm to produce a tubular body. At this time, the winding angle of the UD sheet with respect to the axial direction of the mandrel was set to an angle described in Table 1 in order from the mandrel side to produce 16-layered tubular body 1 and tubular body 2.

The apparatus is a robot equipped with a STWH INB type winding head manufactured by AFPT. The head is configured to perform closed-loop control of a diode laser with an output of 3 kW and a wavelength in the range of 960 to 1070 nm.

**[Table 1]**

| ← Mandrel side | | | | | | | Front side → | | | | | | | | | |
|---|---|---|---|---|---|---|---|---|---|---|---|---|---|---|---|---|
| Layer No. | 1 | 2 | 3 | 4 | 5 | 6 | 7 | 8 | 9 | 10 | 11 | 12 | 13 | 14 | 15 | 16 |
| Tubular body 1 | 70° | -70° | 10° | -10° | 10° | -10° | 10° | -10° | 10° | -10° | 10° | -10° | 10° | -10° | 70° | -70° |
| Tubular body 2 | 45° | -45° | 45° | -45° | 45° | -45° | 45° | -45° | 45° | -45° | 45° | -45° | 45° | -45° | 45° | -45° |

Each of tubular body 1 and tubular body 2 had an inner diameter of 30.0 mm, an outer diameter of 35.0 mm, and a longitudinal dimension of 55.0 m.

### 3. Production of Plate-Like Member

### 3-1. Production of Plate-Like Member 1

An aluminum frame hollowed out in the shape of a 60 mm square was placed on a brass plate. A mold release film, the UD sheet cut into a size of 55 mm x 55 mm, and a mold release film were placed in this order on the aluminum frame. A brass plate was placed thereon to produce a substrate. Eight of the UD sheets stacked were disposed inside the hollow of the aluminum frame. When the carbon fibers in the UD sheet at the bottom had an alignment angle of 0 degrees, the alignment angle of the carbon fibers in each UD sheet were 0, 90, 0, 90, 90, 0, 90, and 0 degrees in order from the bottom.

The substrate was placed in a die of a press machine, the inside of which was heated to 180°C, and was preheated for 4 minutes without applying pressure. The substrate was then transferred to a press machine set at an internal temperature of 15°C, was immediately pressed at 2 MPa and held for 3 minutes, and was then cooled at room temperature. The UD sheet layer was then taken out. This is referred to as plate-like member 1.

### 3-2. Production of Plate-Like Member 2

Plate-like member 2 was produced in the same manner as in the production of plate-like member 1 except that an aluminum frame hollowed out to have a size of 155 mm x 55 mm was used and the UD sheet cut out to have a size of 150 mm x 50 mm was used.

### 3-3. Production of Plate-Like Member 3

Plate-like member 3 was produced in the same manner as in the production of plate-like member 1 except that 8 g of pellets of long-carbon-fiber-reinforced polypropylene (manufactured by Polyplastics Co., Ltd., product name: Plastron PP-CF-40-11) were used instead of the UD sheet.

### 3-4. Production of Plate-Like Member 4

Plate-like member 4 was produced in the same manner as in the production of plate-like member 1 except that 6 g of pellets of polypropylene containing no reinforcing fiber (manufactured by Prime Polymer Co., Ltd., Prime Polypro J106G) was used instead of the UD sheet.

### 4. Production of Adhesive Agent

The following adhesive agents were prepared.
Adhesive agent 1: acrylic adhesive agent (manufactured by 3M Co., product name: DP-8010 Blue, two-component type)
Adhesive agent 2: acrylic adhesive agent (manufactured by Permabond, product name: TA4611, two-component type)
Adhesive agent 3: cyanoacrylate adhesive agent (manufactured by ThreeBond Co., Ltd., product name: TB7737, one-component type)
Adhesive agent 4: cyanoacrylate adhesive agent (manufactured by LOCTITE, product name: 401, one-component type)
Adhesive agent 5: epoxy adhesive agent (manufactured by 3M Co., product name: Automix panel bonding adhesive 8115, two-component type)
Adhesive agent 6: epoxy adhesive agent (manufactured by Mitsui Chemicals, Inc., product name: Struct bond EW-D241, two-component type)
Adhesive agent 7: urethane adhesive agent (manufactured by Emulsion Technology Co., Ltd., product name: MIGHTYGRIP MG-5000 (main agent: MIGHTYGRIP MG5000, curing agent: MIGHTYGRIP MG5030), two-component type)
Adhesive agent 8: acrylic double-sided tape (manufactured by Teraoka Seisakusho Co., Ltd., product name: Tape No. 773)

### 5. Production of Shock-Absorbing Material

### 5-1. Production of Shock-Absorbing Material 1 (Example 1)

One tubular body 1 and two plate-like members 1 were prepared. After both end surfaces of tubular body 1 and the surfaces of plate-like members 1 were degreased with acetone, adhesive agent 1 was applied to both end surfaces of tubular body 1, and tubular body 1 was pressed against the degreased surfaces of plate-like members 1. After the adhesive agent was applied to both end surfaces, and the end surfaces were pressed against the surfaces of plate-like members 1, a 1-kg weight was placed thereon and was allowed to stand for 24 hours to completely cure the adhesive agent. Thus, shock-absorbing material 1 including one tubular body 1 bonded to two plate-like members 1 was produced.

### 5-2. Production of Shock-Absorbing Material 2 (Example 2)

Shock-absorbing material 2 including one tubular body 1 bonded to two plate-like members 1 was produced in the same manner as in the production of shock-absorbing material 1 except that adhesive agent 2 was used instead of adhesive agent 1.

### 5-3. Production of Shock-Absorbing Material 3 (Example 3)

Shock-absorbing material 3 including one tubular body 1 bonded to two plate-like members 1 was produced in the same manner as in the production of shock-absorbing material 1 except that adhesive agent 3 was used instead of adhesive agent 1 and that both end surfaces of tubular body 1 and the surfaces of plate-like members 1 after the degreasing treatment were treated with a primer agent (manufactured by ThreeBond Co., Ltd., product name: TB7797).

### 5-4. Production of Shock-Absorbing Material 4 (Example 4)

Shock-absorbing material 4 including one tubular body 1 bonded to two plate-like members 1 was produced in the same manner as in the production of shock-absorbing material 3 except that adhesive agent 4 was used instead of adhesive agent 3 and that product name SF770 manufactured by LOCTITE was used as the primer agent.

### 5-5. Production of Shock-Absorbing Material 5 (Example 5)

Shock-absorbing material 5 including one tubular body 1 bonded to two plate-like members 1 was produced in the same manner as in the production of shock-absorbing material 1 except that adhesive agent 5 was used instead of adhesive agent 1 and that both end surfaces of tubular body 1 and the surfaces of plate-like members 1 after the degreasing treatment were subjected to plasma treatment using an atmospheric pressure plasma apparatus.

### 5-6. Production of Shock-Absorbing Material 6 (Example 6)

Shock-absorbing material 5 including one tubular body 1 bonded to two plate-like members 1 was produced in the same manner as in the production of shock-absorbing material 5 except that adhesive agent 6 was used instead of adhesive agent 5.

### 5-7. Production of Shock-Absorbing Material 7 (Example 7)

Shock-absorbing material 7 including one tubular body 1 bonded to two plate-like members 1 was produced in the same manner as in the production of shock-absorbing material 5 except that adhesive agent 7 was used instead of adhesive agent 5.

### 5-8. Production of Shock-Absorbing Material 8 (Example 8)

Shock-absorbing material 8 including one tubular body 1 bonded to two plate-like members 1 was produced in the same manner as in the production of shock-absorbing material 1 except that adhesive agent 8 was applied instead of the application of adhesive agent 1.

### 5-9. Production of Shock-Absorbing Material 9 (Example 9)

Shock-absorbing material 9 including one tubular body 1 bonded to two plate-like members 1 was produced in the same manner as in the production of shock-absorbing material 2 except that plate-like member 3 was used instead of plate-like member 1.

### 5-10. Production of Shock-Absorbing Material 10 (Example 10)

Shock-absorbing material 10 including one tubular body 1 bonded to two plate-like members 1 was produced in the same manner as in the production of shock-absorbing material 2 except that plate-like member 4 was used instead of plate-like member 1.

### 5-11. Production of Shock-Absorbing Material 11 (Example 11)

Two tubular bodies 1 and two plate-like members 2 were prepared. After both end surfaces of each tubular body 1 and the surfaces of plate-like members 1 were degreased with acetone, adhesive agent 1 was applied to both end surfaces of each tubular body 1, and tubular bodies 1 were pressed against the degreased surfaces of plate-like members 1. After the adhesive agent was applied to both end surfaces, and the end surfaces were pressed against the surfaces of plate-like members 1, a 1-kg weight was placed thereon and was allowed to stand for 24 hours to completely cure the adhesive agent. Thus, shock-absorbing material 11 including two tubular bodies 1 each bonded to two plate-like members 1 was produced. The distance between two tubular bodies 1 was 25 mm, and two tubular bodies 1 were disposed at the center of each plate-like member 2.

### 5-12. Production of Shock-Absorbing Material 12 (Example 12)

Three tubular bodies 1 and two plate-like members 2 were prepared. After both end surfaces of each tubular body 1 and the surfaces of plate-like members 1 were degreased with acetone, adhesive agent 1 was applied to both end surfaces of each tubular body 1, and tubular bodies 1 were pressed against the degreased surfaces of plate-like members 1. After the adhesive agent was applied to both end surfaces, and the end surfaces were pressed against the surfaces of plate-like members 1, a 1-kg weight was placed thereon and was allowed to stand for 24 hours to completely cure the adhesive agent. Thus, shock-absorbing material 13 including three tubular bodies 1 each bonded to two plate-like members 1 was produced. The intervals between three tubular bodies 1 were 10 mm, and three tubular bodies 1 were linearly disposed at the center in the longitudinal direction of each plate-like member 2.

### 5-13. Production of Shock-Absorbing Material 13 (Comparative Example 1)

One tubular body 1 and two plate-like members 1 were prepared. Both end surfaces of tubular body 1 were pressed against the surfaces of plate-like members 1 to produce shock-absorbing material 13 including one tubular body 1 bonded to two plate-like members 1.

### 5-14. Production of Shock-Absorbing Material 14 (Comparative Example 2)

Shock-absorbing material 14 including one tubular body 2 bonded to two plate-like members 1 was produced in the same manner as in the production of shock-absorbing material 2 except that tubular body 2 was used instead of tubular body 1.

### 6. Evaluation

### 6-1. Amount of Energy Absorption (EA)

Each of the shock-absorbing materials was compressed with a universal testing machine (manufactured by Shimadzu Corporation, universal testing machine AG-100kNX-Plus) at an indenter size of Φ200 mm and at a speed of 3 mm/min in the axial longitudinal direction until a crosshead moved 30 mm. The load [N] and the amount of movement [mm] of the crosshead were measured.

Assuming that the amount of movement of the cross head is the amount of displacement of each shock-absorbing material, the integral value from a displacement of 0 mm to a displacement of 30 mm in a load-displacement curve obtained in the above test was defined as the amount of energy absorption (EA) [J].

### 6-2. Amount of Energy Absorption (EA) per Unit Area

The unit area of each shock-absorbing material was calculated from (outer diameter of tubular body/2) x (outer diameter of tubular body/2) x π - (inner diameter of tubular body/2) x (inner diameter of tubular body/2) x π, and the amount of EA per unit area was calculated from the amount of EA/unit area.

### 6-3. Fracture Morphology

Each of the shock-absorbing materials after the compression test was visually inspected for the shape. A tubular body torn outward and inward and roundly broken was considered to be indicative of progressive crushing (PC). A broken tubular body was considered to be indicative of buckling.

### 7. Results

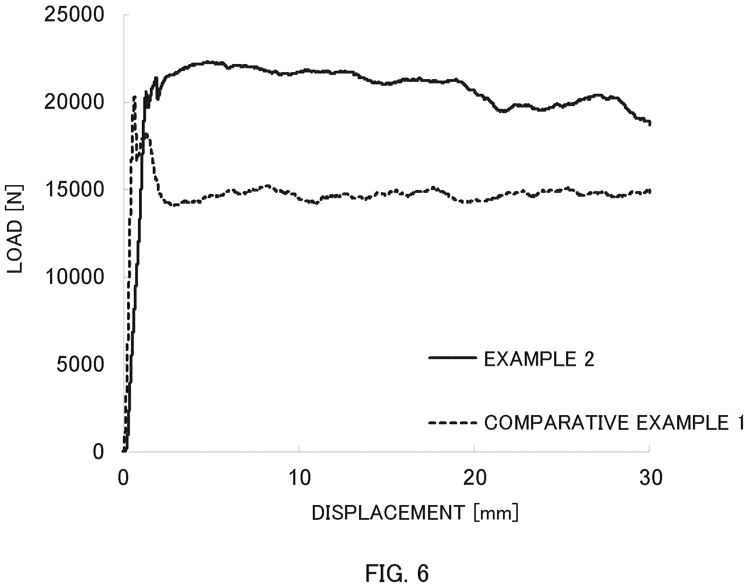

Tables 2 to 4 show the manufacturing conditions and evaluation results of the shock-absorbing materials 1 to 14. FIG. 6 shows load-displacement curves of Example 2 and Comparative Example 1.

**[Table 2]**

| Note | | Example | Example | Example | Example | Example | Example |
|---|---|---|---|---|---|---|---|
| Shock-absorbing material | Designation | 1 | 2 | 3 | 4 | 5 | 6 |
| Tubular body | Designation | Tubular body 1 | Tubular body 1 | Tubular body 1 | Tubular body 1 | Tubular body 1 | Tubular body 1 |
| | Buckling prevention layer [°] | 70, -70 | 70, -70 | 70, -70 | 70, -70 | 70, -70 | 70, -70 |
| | Easily breakable layer [°] | 10, -10 | 10, -10 | 10, -10 | 10, -10 | 10, -10 | 10, -10 |
| | Another layer [°] | - | - | - | - | - | - |
| | Number of laminated layers [ply] | 16 | 16 | 16 | 16 | 16 | 16 |
| | Number of tubular bodies [-] | 1 | 1 | 1 | 1 | 1 | 1 |
| Sheet material | Sheet material name | Sheet material 1 | Sheet material 1 | Sheet material 1 | Sheet material 1 | Sheet material 1 | Sheet material 1 |
| | Material quality | UD sheet | UD sheet | UD sheet | UD sheet | UD sheet | UD sheet |
| Adhesive agent | Adhesive agent name | Adhesive agent 1 | Adhesive agent 2 | Adhesive agent 3 | Adhesive agent 4 | Adhesive agent 5 | Adhesive agent 6 |
| | Type | Acrylic | Acrylic | Cyanoacrylate | Cyanoacrylate | Epoxy | Epoxy |
| | Adhesive agent thickness [µm] | 250 | 250 | 50 | 50 | 250 | 250 |
| Measurement results | Amount of EA [J] | 574 | 613 | 531 | 510 | 541 | 535 |
| | Amount of EA per unit area [J/cm³] | 225 | 240 | 208 | 200 | 212 | 210 |
| | Fracture morphology | PC | PC | PC | PC | PC | PC |

**[Table 3]**

| Note | | Example | Example | Example | Example | Example | Example |
|---|---|---|---|---|---|---|---|
| Shock-absorbing material | Designation | 7 | 8 | 9 | 10 | 11 | 12 |
| Tubular body | Designation | Tubular body 1 | Tubular body 1 | Tubular body 1 | Tubular body 1 | Tubular body 1 | Tubular body 1 |
| | Buckling prevention layer [°] | 70, -70 | 70, -70 | 70, -70 | 70, -70 | 70, -70 | 70, -70 |
| | Easily breakable layer [°] | 10, -10 | 10, -10 | 10, -10 | 10, -10 | 10, -10 | 10, -10 |
| | Another layer [°] | - | - | - | - | - | - |
| | Number of laminated layers [ply] | 16 | 16 | 16 | 16 | 16 | 16 |
| | Number of tubular bodies [-] | 1 | 1 | 1 | 1 | 2 | 3 |
| Sheet material | Sheet material name | Sheet material 1 | Sheet material 1 | Sheet material 3 | Sheet material 4 | Sheet material 2 | Sheet material 2 |
| | Material quality | UD sheet | UD sheet | Long-carbon-fiber-reinforced PP | PP | UD sheet | UD sheet |
| Adhesive agent | Adhesive agent name | Adhesive agent 7 | Adhesive agent 8 | Adhesive agent 2 | Adhesive agent 2 | Adhesive agent 1 | Adhesive agent 1 |
| | Type | Urethane | Acrylic | Acrylic | Acrylic | Acrylic | Acrylic |
| | Adhesive agent thickness [µm] | 250 | 250 | 250 | 250 | 250 | 250 |
| Measurement results | Amount of EA [J] | 526 | 549 | 611 | 637 | 1189 | 1771 |
| | Amount of EA per unit area [J/cm3] | 206 | 215 | 239 | 250 | 233 | 231 |
| | Fracture morphology | PC | PC | PC | PC | PC | PC |

**[Table 4]**

| Note | | Comparative Example | Comparative Example |
|---|---|---|---|
| Shock-absorbing material | Designation | 13 | 14 |
| Tubular body | Designation | Tubular body 1 | Tubular body 2 |
| | Buckling prevention layer [°] | 70, -70 | - |
| | Easily breakable layer [°] | 10, -10 | - |
| | Another layer [°] | - | 45, -45 |
| | Number of laminated layers [ply] | 16 | 16 |
| | Number of tubular bodies [-] | 1 | 1 |
| Sheet material | Sheet material name | Sheet material 1 | Sheet material 1 |
| | Material quality | UD sheet | UD sheet |
| Adhesive agent | Adhesive agent name | Not used | Adhesive agent 2 |
| | Type | | Acrylic |
| Measurement results | Amount of EA [J] | 441 | 285 |
| | Amount of EA per unit area [J/cm³] | 173 | 112 |
| | Fracture morphology | PC | Buckling |

As is clear from Tables 2 to 4, the shock-absorbing material including the tubular body, which included the buckling-reducing layer and the easily breakable layer, and the plate-like member bonded to the tubular body via the adhesive layer was broken by progressive crushing and absorbed a large amount of energy. As is also clear from FIG. 6, Example 2 using an acrylic adhesive agent had no clear yield point and could continuously absorb a certain degree of load even when the displacement was increased, whereas Comparative Example 1 yielded and absorbed an extremely reduced amount of load when the displacement was increased beyond the yield point.

The present application claims priority from Japanese Patent Application No. 2022-048571 filed on March 24, 2022. The matters described in the description, the claims, and the drawings at the time of filing of the application are incorporated herein by reference.

### Industrial Applicability

A shock-absorbing material according to the present invention can be suitably used as a shock-absorbing material or the like disposed in an automobile.

### Reference Signs List

100 shock-absorbing material
110 tubular body
112 region
114, 114a, 114b, 114c fiber-reinforced resin layer
116a, 116c, 116aa, 116cc buckling-reducing layer
118b, 118bb easily breakable layer
120, 130 plate-like member
140, 150 adhesive layer
210 reinforcing fibers
220 resin
500 apparatus
502a, 502b support
504a, 504b rotating support section
510 mandrel
520 fusion unit
521 storage section
522 guide roller
524 laser irradiation section
524a laser oscillation source
525 drafting roller
530 UD tape

## Claims

1. A shock-absorbing material comprising: a tubular body; and a plate-like member bonded to an end surface of the tubular body,
wherein the tubular body includes a laminate of fiber-reinforced resin layers, the fiber-reinforced resin layers containing a plurality of unidirectionally aligned reinforcing fibers and a resin impregnated into the plurality of reinforcing fibers,
the tubular body includes a buckling-reducing layer and an easily breakable layer, and
the plate-like member is bonded to the tubular body via an adhesive layer.

2. The shock-absorbing material according to claim 1, wherein the adhesive layer comprises an acrylic adhesive agent or a cured product thereof.

3. The shock-absorbing material according to claim 1 or 2, wherein in the buckling-reducing layer an angle formed by an alignment direction of the reinforcing fibers with respect to a length direction of the tubular body is 60 degrees or more and 80 degrees or less.

4. The shock-absorbing material according to any one of claims 1 to 3, wherein in the easily breakable layer an angle formed by an alignment direction of the reinforcing fibers with respect to a length direction of the tubular body is 5 degrees or more and less than 30 degrees.

5. The shock-absorbing material according to any one of claims 1 to 4, wherein the laminate has a structure composed of the buckling-reducing layer, the easily breakable layer, and the buckling-reducing layer stacked in this order from an inside to an outside of the tubular body.

6. The shock-absorbing material according to any one of claims 1 to 5, wherein the plate-like member contains a thermoplastic resin.

7. The shock-absorbing material according to any one of claims 1 to 6, wherein the fiber-reinforced resin layer contains the plurality of reinforcing fibers and a thermoplastic resin impregnated into the plurality of reinforcing fibers.

8. The shock-absorbing material according to any one of claims 1 to 7, comprising a plurality of the tubular bodies, wherein the plurality of tubular bodies are bonded to the plate-like member.

9. A method for manufacturing a shock-absorbing material, the method comprising:
preparing a tubular body including a laminate of fiber-reinforced resin layers, the fiber-reinforced resin layers containing a plurality of unidirectionally aligned reinforcing fibers and a resin impregnated into the plurality of reinforcing fibers, the tubular body including a buckling-reducing layer and an easily breakable layer; and
bonding a plate-like member to an end surface of the tubular body using an adhesive agent.
